Europäisches Patentamt

European Patent Office

Office européen des brevets

(11) Publication number: **0 304 598**
A2

## (12) EUROPEAN PATENT APPLICATION

(21) Application number: **88111188.4**

(22) Date of filing: **13.07.88**

(51) Int. Cl.⁴: **H05K 7/18 , H05K 11/02**

(30) Priority: **26.08.87 IT 2172487**

(43) Date of publication of application:
**01.03.89 Bulletin 89/09**

(84) Designated Contracting States:
**AT BE CH DE ES FR GB GR LI NL SE**

(71) Applicant: **TECNOPLASTICA VALTELLINESE S.r.l.**
**Via San Martino, 12**
**I-23010 Piantedo (Sondrio)(IT)**

(72) Inventor: **Denti, Giuliano**
**Via A. Volta, 22**
**I-23010 Piantedo (Sondrio)(IT)**

(74) Representative: **Lunati, Vittoriano**
**LUNATI & MAZZONI S.a.s. Via Carlo Pisacane, 36**
**I-20129 Milano(IT)**

(54) **A locking device for mounting the fixed part of a split car radio set.**

(57) The invention relates to a locking device for mounting the fixed part of a split car radio set, in particular for mounting said fixed part (20) to a wall (30) of a vehicle dashboard, there being provided in said device a locking member (5) comprising at least two plates (2,3) overlapping each other, a neck (4) intervening unitarily between said plates (2,3), and a serration (10) formed in at least one of said plates (2,3), and there being further provided a window (11) formed in said fixed part (20) and suroounded at least in part by a serrated region (15) engageable in interfit relationship with said serration (10), said serrated region (15) having juxtaposed edges (14a) which are spaced apart from each other to accommodate said neck (4) and said neck (4) being slidable between said juxtaposed edges (14a) toward a bent-over border (12) of said fixed part (20) to clamp said wall (30) between said locking member (5) and said bent-over border (12) and engage said serration (10) with said serrated region (15) in interfit relationship.

FIG. 2

# A LOCKING DEVICE FOR MOUNTING THE FIXED PART OF A SPLIT CAR RADIO SET

This invention relates to a locking device for mounting the fixed part of a split car radio set, particularly on a motor vehicle.

As is known, it is most common to have a vehicle equipped with a radio set, and to defeat theft, split radio sets are preferably installed also on those motor vehicles which are not provided with releasable radio mounts as a standard feature. Accordingly, a complementary fixed part is fitted into a suitable recess to accommodate the car radio set which is box-shaped and has a raised border adapted to abut the dashboard wall, peripherally of said recess.

This complementary fixed part is then connected to the motor vehicle battery and to loudspeakers, and thus made ready for the fitting of a radio set proper in a releasable fashion thereinto, the radio set comprising the wireless receiver circuit and connector pins adapted to be plugged into electric sockets provided in the fixed part. The radio set is, therefore, a split pull-out/push-in set.

The reiterate pulling and pushing of the radio set out of and into the fixed part, which may be made awckward by the usually confined space available, may also lead to problems from said fixed part coming loose on the car dashboard wall.

It is also expedient that the means used for fastening the fixed part of the radio set to the dashboard wall should involve no alterations or adaptations of the dashboard (such as the drilling of holes), and that said fixed part be to a standard design, i.e. fit a range of car models.

This being the situation, it is the object of the invention to provide a locking device which affords ease of installation of the fixed part of a split car radio set and a firm mount therefor, using strongly built components adaptable to any car dashboards.

Said object is substantially achieved by a locking device for mounting the fixed part of a split car radio set, in particular for mounting one said fixed part having a bent-over border engageable with a wall of a vehicle dashboard, the device being characterized in that it comprises:
a locking member including at least two superimposed plates, a neck intervening unitarily between said plates, and a serration formed on at least one of said plates;
a window formed in said fixed part and at least partly surrounded by a serrated region engageable with said serration in interfit relationship therewith, said window having two juxtaposed parallel edges set apart to accommodate said neck; and
said neck being slidable between said juxtaposed edges toward said bent-over border to clamp said wall between said locking member and said bent-over border and engage said serration in interfit relationship with said serrated region.

The inventive device has preferably said serrated region and said serration formed with sawteeth.

Expediently in the device of this invention said plates are a first plate and a second plate, with said second plate being substantially I-shaped and having end wings, said wings comprising first wings formed with said serration and second wings engageable with said wall.

The following detailed description of a preferred embodiment of a device according to the invention is given herein below by way of example with reference to the accompanying drawing, where:

Figure 1 is a part-sectional side view of the upper portion of the fixed part of a split car radio set, as engaged with a wall of a dashboard by means of the inventive locking device;

Figure 2 is a top view of Figure 1;

Figure 3 is a bottom view of the locking member of the inventive device;

Figure 4 is a longitudinal section view of Figure 3, taken along the line IV-IV;

Figure 5 is a view of the locking device shown in Figure 3, taken in the direction of the arrows V-V in Figure 3; and

Figure 6 is a general top view of the fixed part of a car radio set, which is to be secured to the dashboard.

With reference to the drawing views, the locking device according to the invention is comprehensively designated 1. It is specifically intended for securing a fixed part 20 of a split car radio set to a wall 30 of a vehicle dashboard. The fixed part 20 has, preferably, a bent-over border 12 at the entrance opening for the radio set which is sized to be engageable with the wall 30.

In summary, the device 1 comprises a locking member 5 slidable within a window 11 formed in the fixed part 20 adjacently the bent-over border 12.

The locking member 5 includes two overlapping plates which are set apart from and parallel to each other: a first plate 2 of a smaller size, and a second plate 3 of a larger size. Interposed unitarily between the plates 2 and 3 is a neck 4.

The first plate 2 and the neck 4 are rectangular in shape, and the large plate 3 is preferably formed from an elastic material and substantially I-shaped.

The second plate 3 has, in fact, on one end facing the bent-over border 12, first curved wings 7 having two forward edges 7a, the other end having second wings 6 consisting of a rectangular element formed on one face confronting the plate 2 with serrations 10 arranged symmetrically about the sliding axis of the locking member 5 in the window 11.

The serrations 10 are sawtooth-shaped, i.e. in the form of slanted steps effective to allow the locking member 5 to slide toward the bent-over wall 12 but not in the opposite direction.

The locking member 5 is formed with a rectangular center hole 8 through the plates 2, 3 and the neck 4, and with a rectangular hole 9 located centrally on the rectangular element which forms the wing pair 6.

The window 11 has a straight notch 14 extending perpendicularly to the bent-over border 12, which is bent outwardly such that it can be brought to abut the dashboard wall 30, as noted above. The notch 14 defines juxtaposed edges 14a set apart from each other by a distance which is barely longer than the overall dimension of the neck 4, parallel to the plates 2 and 3.

The window 11 has a widened region 13, remote from the bent-over border 12, having corresponding dimensions to the overall dimensions of the second plate 3.

On the sides of the notch 14 and close to the juxtaposed edges 14a, there is a serrated region 15 with slanted steps adapted for engagement with the serration 10.

The device described herein above mainly in a structural sense operates as follows.

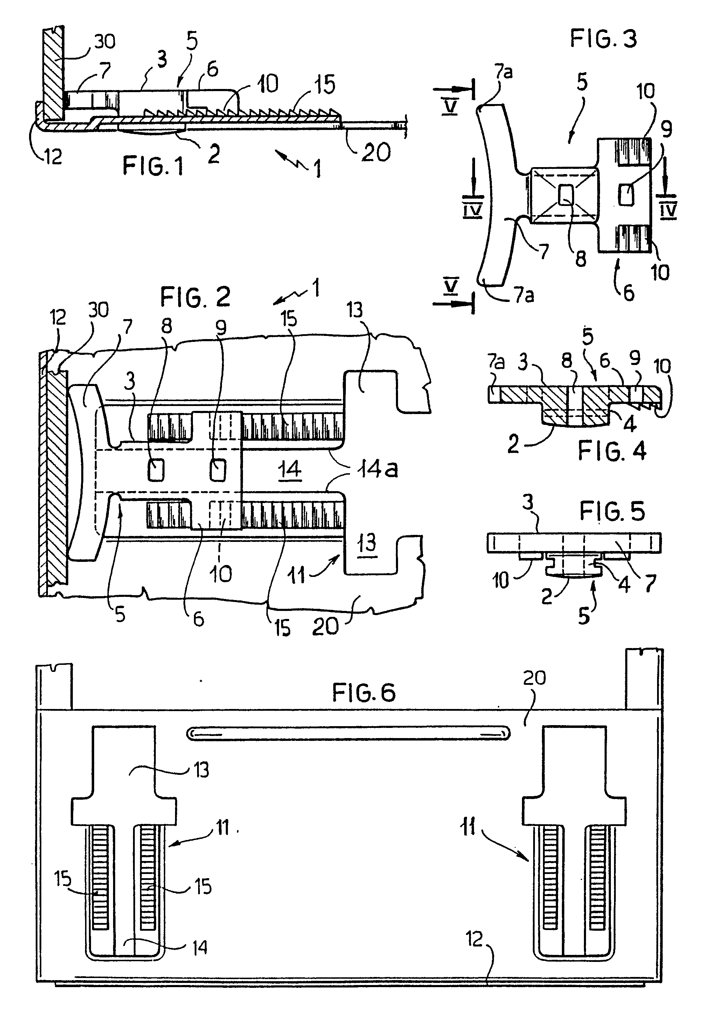

The second plate 3 is passed through the widened region 13 of the window 11, and the locking member 5 is pushed toward the bent-over border 12 so that the neck 4 will fit into the notch 14. During the sliding movement of the locking member 5 along the window 11, the serrations 10 of the second wings 6 bear on the serrated region 15 of the fixed part 20, the slant of the steps making for an easy relative displacement in that direction. On the locking member 5 reaching its travel limit, the first wing 7 will press the dashboard wall 30 against the raised border 12 by bearing elastically thereon, thus locking the fixed part 20 (as shown in Figures 1 and 2).

At this stage, the locking member 5 cannot leave the position it has reached because the steps of the serrated region 15 will be engaged with the serration 10 and prevent it from sliding back.

If required, release is accomplished by acting on the locking member 5 through the holes 8 or 9 with a key; the second wings 6 are pried up by a pivotal movement on the first wings 7, and the serration 10 is thus moved forcibly upwards away from the serrated region 15, thereby becoming disengaged from it.

At each fixed part 20, there may be provided plural locking devices 1, e.g. two devices 1 arranged symmetrically on the top wall, as shown in Figure 6, and two devices 1 on the bottom wall.

## Claims

1. A locking device for mounting the fixed part of a split car radio set, in particular for mounting one said fixed part (20) having a bent-over border (12) engageable with a wall (30) of a vehicle dashboard, the device being characterized in that it comprises:
a locking member (5) including at least two superimposed plates (2,3), a neck (4) intervening unitarily between said plates (2,3), and a serration (10) formed on at least one of said plates (2,3);
a window (11) formed in said fixed part (20) and at least prtly surrounded by a serrated region (15) engageable with said serration (10) in interfit relationship therewith, said window (11) having two juxtaposed parallel edges (14a) set apart to accommodate said neck (4);
said neck (4) being slidable between said juxtaposed edges (14a) toward said bent-over border (12) to clamp said wall (30) between said locking member (5) and said bent-over border (12) and engage said serration (10) in interfit relationship with said serrated region (15).

2. A device according to Claim 1, characterized in that said serrated region (15) and said serration (10) are formed as sawteeth.

3. A device according to Claim 1, characterized in that said plates comprise a first plate (2) and a second plate (3), and said second plate (3) is substantially I-shaped and has end wings (6,7), said wings comprising first wings (6) formed with said serration (10) and second wings (7) face engageable with said wall (30).

4. A device according to Claim 1, wherein said locking member (5) is made of an elastic material.

5. A device according to Claim 3, wherein said second wings are made of an elastic material and concave in shape so as to defined two elastic-type bearing points with said wall (30).

6. A device according to Claim 3, wherein said window (11) has a straight notch (14) formed therein and bordered by said juxtaposed edges (14a) and a widened region (13) adapted to admit said second plate (3) therehtrough.

7. A device according to Claim 3, wherein said neck (4) is located centrally with respect to said second plate (3) between said second wings (7) and said serration (10).

8. A device according to Claim 6, wherein said notch (14) extends perpendicularly to said bent-over border (12) with said fixed part (20) in its mounted position.

9. A device according to Claim 1, wherein said locking member (5) has at least one hole (8,9) through which a key may be passed to disengage said serration (10) from said serrated region (15).

10. A device according to Claim 6, wherein two such serrated regions (15) are arranged on opposed sides of said notch (14).

FIG. 1

FIG. 2

FIG. 3

FIG. 4

FIG. 5

FIG. 6